Europäisches Patentamt

European Patent Office

Office européen des brevets

(19)

(11) **EP 1 130 134 A1**

(12) **EUROPEAN PATENT APPLICATION**
published in accordance with Art. 158(3) EPC

(43) Date of publication:
**05.09.2001 Bulletin 2001/36**

(51) Int Cl.7: **C25B 9/00**
// C25B1:02

(21) Application number: **98935437.8**

(22) Date of filing: **22.06.1998**

(86) International application number:
**PCT/RU98/00190**

(87) International publication number:
**WO 99/18262 (15.04.1999 Gazette 1999/15)**

(84) Designated Contracting States:
**AT BE CH CY DE DK ES FI FR GB GR IE IT LI LU MC NL PT SE**

(30) Priority: **07.10.1997 RU 97116916**

(71) Applicants:
• **Kudymov, Georgy Ivanovich**
  **Moscow (RU)**
• **Studennikov, Vasily Vasilievich**
  **Moscow, 117574 (RU)**

(72) Inventors:
• **Kudymov, Georgy Ivanovich**
  **Moscow (RU)**
• **Studennikov, Vasily Vasilievich**
  **Moscow, 117574 (RU)**

(74) Representative: **Griebling, Onno**
**Exter Polak & Charlouis B.V.,**
**P.O. Box 3241**
**2280 GE Rijswijk (NL)**

(54) **ENERGY CONVERSION DEVICE**

(57)     The invention relates to power engineering, and may be used in designing devices for converting one type of energy to another, for example, by electrolysis.

It is an object of the invention to provide a device which would enable simultaneous conversion of Mechanical and Thermal energies into Electrical and Chemical energies.

The technical results attained from the use of the device include: the enhanced efficiency of electrolysis, production of electrical energy along with oxygen and hydrogen, and utilization of heat of any natural or technogenic origin.

A device for converting energy, for example, by electrolysis, comprises a rotating vessel with a shaft, said vessel being filled with an electrolytic solution. The vessel is mounted on a base, and connected to a rotary drive. The device comprises electrodes, and passages for feeding the electrolytic solution to the vessel and discharging products of electrolysis. The device further includes a heat exchanger. The electrodes are either short-circuited, or connected to form a loop via a power consumer. The vessel is mounted so that to rotate at an angular speed $\omega$ which is determined from the following mathematical relation:

$$\omega \geq \{[q_\alpha \; q_c(1-\alpha T)][16 \; \pi \; \varepsilon \; \varepsilon_0 \; \Delta m \; \rho \; h \; K(R-0.5h)(2r_w+r_i)^2]^{-1}\}^{0.5},$$

where

$q_\alpha q_c$ are the anionic and cationic charge in the electrolyte, in stoichiometric relation, C;
$T$ is the absolute temperature of the solution, K;
$\Delta m$ is the difference between weights of hydrated cations and anions, kg;
$\rho$ is the linear concentration of heavy ions, $m^{-1}$;

$\rho = 10(C \cdot N)^{1/3}$, where
c is the mole percentage of the solution, $mole \cdot 1^{-1}$,
N is Avogadro constant, $mole^{-1}$;

$h$ is the height of a solution column, m;
$K$ is the electrolyte dissociation range, $10^{-2}\%$;
$R$ is the inner radius of the vessel, m;

$\alpha$ is the temperature coefficient of change in hydrate bond energy, $K^{-1}$;

$\varepsilon_0$ is the absolute permittivity, $F \cdot m^{-1}$;

$\varepsilon$ is the relative permittivity of water;

$r_w$ is the effective radius of water molecule, m;

$r_i$ is the effective radius of heavy ion, m;

$\pi$ is the transcedental number, 3.141.

**Description**

The present invention relates to power engineering, and may be used in designing devices for converting one type of energy into another, for example, by electrolysis.

Disclosed in RF patent 2015395, Int.Cl. F 02 I 21/00, 1990, is a device for converting mechanical energy to electrical one, and then to chemical energy through decomposition of water by electrolysis of an electrolytic solution, thereby producing hydrogen and oxygen. The device comprises a vessel with a shaft which is rotatably mounted in supports on a base. The shaft is kinematically coupled to a rotary drive, such as an internal-combustion engine (ICE), and an electric current generator. The vessel is filled with an electrolytic solution, and comprises electrodes coupled to the generator electric circuit, and passages for feeding stock and discharging end products of electrolysis.

The attainment of the required technical result by the prior device, however, is hampered by principally different design approach to the achievement of the final result from the use of the device. Further, the prior device does not allow nontraditional energy conversions, especially, in a complex, i.e. several parallel conversion cycles at the same time.

During rotation of the vessel, the device provides a successive conversion of mechanical energy of the drive first to electricity, and only then to chemical energy of hydrogen and oxygen produced from water. Such a mandatory succession of the energy conversion process predetermines a low efficiency of the device, because endothermic effect from the water decomposition reaction is compensated for through the use of the electric power generated, this preventing the power to be beneficially utilized at an external load without a dramatic reduction in the yield of hydrogen and oxygen.

It is an object of the present invention to provide a device which would ensure a simultaneous conversion of Mechanical and Thermal energies into Electrical and Chemical energies.

The technical results attained from the use of the present invention include: the enhanced efficiency of electrolysis, production of electrical power along with oxygen and hydrogen, and utilization of heat of any natural or technogenic origin.

The object of the invention and the above technical results can be attained in a device for converting energy, for example, by electrolysis, comprising a rotating vessel with a shaft, said vessel being filled with an electrolytic solution, and mounted on a base, and connected to a rotary drive; electrodes, and passages for feeding the electrolytic solution to the vessel and discharging electrolysis products, wherein the device in accordance with the invention further comprises a heat exchanger, said electrodes being either short-circuited, or connected to form a loop via a power consumer, the vessel being mounted so that to rotate at an angular speed $\omega$ which is determined from the following mathematical relation:

$$\omega \geq \{[q_\alpha q_c (1-\alpha T)][16 \ \pi \ \varepsilon \ \varepsilon_0 \ \Delta m \ \rho \ h \ K(R-0.5h)(2r_w+r_i)^2]^{-1}\}^{0.5},$$

where

$q_\alpha q_c$ are the anionic and cationic charge in the electrolyte, in stoichiometric relation, C;

$T$ is the absolute temperature of the solution, K;

$\Delta m$ is the difference between weights of hydrated cations and anions, kg;

$\rho$ is the linear concentration of heavy ions, m$^{-1}$;

$\rho = 10(C \cdot N)^{1/3}$, where
$c$ is the mole percentage of the solution, mole·l$^{-1}$,
$N$ is Avogadro constant, mole$^{-1}$;

$h$ is the height of a solution column, m;

$K$ is the electrolyte dissociation range, 10$^{-2}$%;

R is the inner radius of the vessel, m;

$\alpha$ is the temperature coefficient of change in hydrate bond energy, K$^{-1}$;

$\varepsilon_0$ is the absolute permittivity, $F \cdot m^{-1}$;

$\varepsilon$ is the relative permittivity of water;

$r_w$ is the effective radius of water molecule, m;

$r_i$ is the effective radius of heavy ion, m;

$\pi$ is the transcedental number, 3.141.

The above mathematical relation has been derived as the result of empiric and theoretical investigations. The mathematical computations and reasoning are rather extensive and are not given here in order to avoid overburden on the application materials.

The present invention will become more apparent to those skilled in the art upon a reading of the following detailed description when taken in conjunction with the drawings, wherein

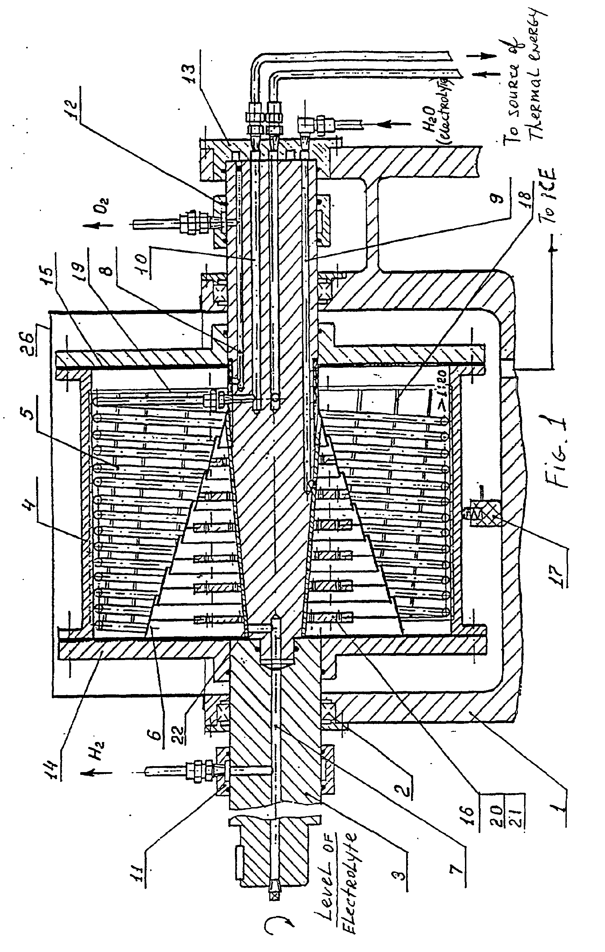

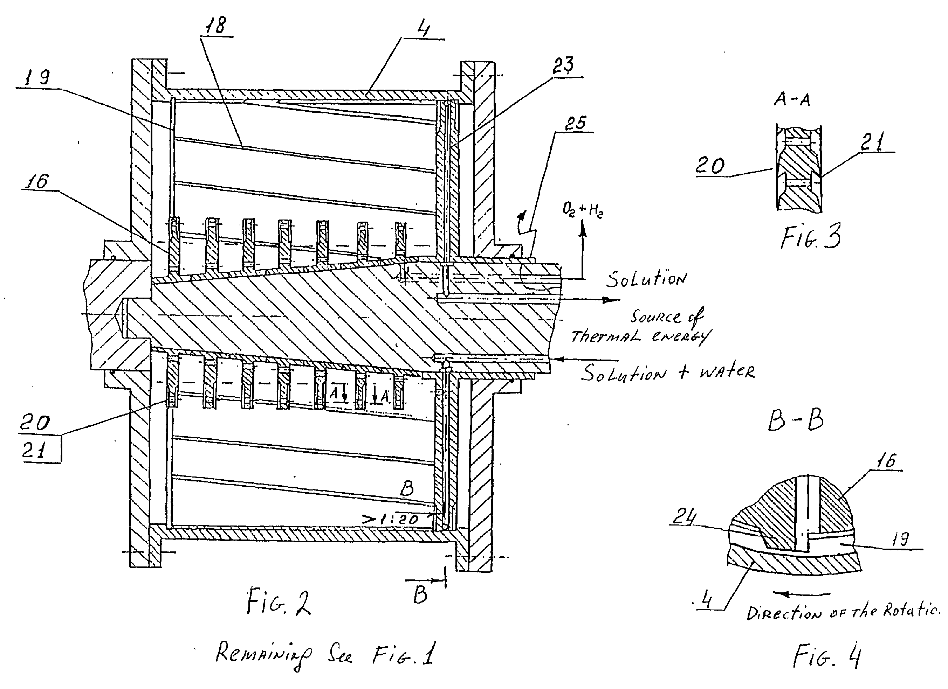

Fig. 1 and Fig.2 are principal structural diagrams of different embodiments of an energy conversion device in accordance with the present invention.

Referring now to the drawings, an energy conversion device comprises a base I with a shaft 2, and a rotating vessel 3 which is mounted on the shaft 2 and filled with an aqueous electrolytic solution. The vessel 3 is connected to a rotary drive (not shown). The device has electrodes 4 and 5, and passages 6, 7 and 8 to feed the electrolytic solution and to discharge products of electrolysis, respectively.

Different embodiments of the device assume different designs of a heat exchanger. Thus, Fig.1 shows, for example, a tubular heat exchanger 9 located within the vessel 3, while in another embodiment shown in Fig.2, a housing of the vessel 3 can function as the heat exchanger 9.

As far as the design of electrodes is concerned, the following is worthy of note. Inner surface of the rotating vessel 3 can be used as one electrode 4. As a second electrode 5, the use can be made of various structural members mounted, for example, on the shaft 2 inside the vessel 3. In both Figs.1 and 2, the electrode 5 is designed, for example, in the form of free-rotating metal disks which are connected together and mounted on the shaft 2. Depending on chemical composition of the electrolyte used in the device, each of the electrodes can function as cathode or anode.

In one embodiment, the device can be, for example, equipped with a separator 10. In the other cases (Fig. 2), for example, when the device is combined with an internal combustion engine, hydrogen and oxygen need not be separated as they are directed to subsequent combustion, therefore, no separator 10 is employed. Moreover, the electrolytic solution can function as a heat-carrying medium, hence, the internal heat exchanger 9 is meaningless as well.

Designs of the heat exchanger and electrodes do not form the subject matter of the present invention.

The electrodes 4 and 5 can be either short-circuited (implementation of this embodiment is simple, therefore, it is neither described within the body of this application, nor included into the scope of claims), or connected, for example, by a sliding contact 11, to form a loop via a power consumer (not shown). This connection has multiple embodiments and does not form the subject matter of the invention. It should be only noted that the loop-coupling via a power consumer is possible due to the fact that in operation the device generates electrical power. This explains the appearance of the power consumer.

In order to reduce vessel-air friction loss, in one embodiment the vessel 3 can be enclosed in a jacket 12 (which does not constitute the subject matter of the invention) which forms a sealed cavity communicating with either an air intake system in an internal combustion engine, or a vacuum pump, which reduce gas pressure and thereby the friction.

Further. to provide circulation of the electrolytic solution, the electrode 5 disks may comprise radial passages, while the disks themselves are kinematically connected to a brake assembly (not shown) to reduce their rotation frequency relative to that of the vessel 3, so that a dynamic flow of liquid is generated within the passages. These embodiments do not form the subject matter of the invention.

As for the mathematical relation which determines angular speed $\omega$ of rotation:

$$\omega \geq \{[q_\alpha q_c(1-\alpha T)][16 \pi \varepsilon \varepsilon_0 \Delta m \rho h K(R-0.5h)(2r_w+r_i)^2]^{-1}\}^{0.5},$$

it has been already mentioned that the computations which have led to this relation are rather extensive and there is no sense in their description in the application materials.

An energy conversion device in accordance with the present invention operates as follows.

A required volume of a prepared electrolytic solution is supplied to the rotating vessel 3 through the passage 6. The electrolyte level covers the electrode 5. The vessel 3 is being speeded up to a rotation frequency determined for the device from the above relation. If this value is lower than the computed (threshold) one, the electrolysis efficiency associated with the water decomposition process will be dramatically reduced, or the electrolysis will be generally infeasible. Once the rotation frequency has been reached, water decomposes into hydrogen and oxygen. Dosed supply of water or fresh solution of electrolyte is provided into the vessel 3 through the passage 6, while hydrogen, oxygen, and other intermediate and end products of the process are discharged from the vessel 3 through the passages 7 and 8, respectively.

During operation of the device, centrifugal force generates an artificial gravity field in the vessel 3. Cations and anions in the form of hydrates having essentially different intrinsic weight are being separated in this field. Heavier ions will affect each other by their electric field, and a region with an increased concentration of like ions, for example, anions, i.e. a negative spatial charge, will appear over the solution periphery on the inner surface of the vessel 3, being one of the electrodes. The negative spatial charge will induce an adequate charge (potential) from conductivity electrons on the external surface of the vessel 3.

Light ions, in turn, will concentrate in the region between the spatial charge and the electrode 5 and generate their own spatial charge (potential) opposite in sign. A distance between cations and anions in the solution at a conditional interface between the two spatial charges is always greater than the distance between the cations and the cathode surface, hence, electrical field strength will be higher in the latter case. For this reason the occurred balance will be disturbed just at the electrode 5, if the magnitude of its potential appears to be sufficient to generate an electrical field capable of deforming hydrate shells of light ions. Then, they will approach the surface of the electrode 5 and discharge. Heavy ions pressed by centrifugal force against the surface of the other electrode 4, cannot exist separately in the solution, therefore, they will also give their charge to the electrode 4, and an electrical current will flow between them through a sliding contact 11 or a short-circuited conductor. Electrolyte ions will be reduced to hydrogen and oxygen, while intermediate electrolysis products with enter into secondary reactions with water. Therefore, in the energy conversion device in accordance with the invention, the electric current is generated by the chemical oxidation-reduction reactions occurring on the electrodes, but not vice versa, as it takes place in the prior art device.

The reactions which produce molecular hydrogen and oxygen are exothermal, this indicating that they can proceed spontaneously, but only provided the energy barrier established by hydrate bond forces is overcome. This barrier is destroyed by mechanical field of the artificial gravity. Therefore, the process becomes irreversible and acquires a stable long-term nature owing to the fact that the above field is stationary, and new ions come from the other layers of the solution to replace discharged (reduced) ions. Reduced hydrogen and oxygen surface to the centre of the vessel 3, and, if required, they are separated by the separator 10 and discharged from the vessel through respective passages 7 and 8, giving the acquired momentum to the solution, and thereby decreasing the mechanical energy loss at the device drive.

The hydrogen production of the invented device is controlled by changing the rotation frequency of the vessel 3 or the ohmic resistance value of the external power consumer load. At its minimum value, i.e. at electrode-to-electrode fault, voltage at the electrodes will be equal to a sum of concentration potential difference and electromotive force (EMF) of the centrifugal field. If the external resistance increases, the voltage at electrodes will adequately increase and the current at the consumer load will be decreased. In this regard, the device in accordance with the invention essentially differs over conventional electrochemical and electromagnetic sources and energy converters.

Furthermore, the operating process of the device in accordance with the invention exhibits other peculiarities which are worthy of note.

The process of water decomposition into oxygen and hydrogen owing to reduction of their ions is accompanied by the decrease in solution enthalpy, this resulting in gradual decrease of the solution temperature, and if the thermal loss is not replenished, the solution will freeze and the process will terminate. For this reason, the solution is heated. In the event the heat gain is insufficient, the solution temperature will become lower than the ambient temperature, and the conditions required for external heat absorption in the mode of electrochemical thermal pump will occur. Under these conditions the device converts low-potential thermal energy into high-potential chemical energy of hydrogen and oxygen reduced from water. Upon their combustion, this offers a means of obtaining a thermal energy again, but with a greater potential, i.e. of concentrating (transforming) the energy as much as possible for its utilization.

It should be noted that that the thermal energy, which is delivered to the device as the result of the mechanical operation for deforming hydrate bonds of ions in the aqueous electrolytic solution, is being simultaneously converted to potential chemical and electrical energy. The total efficiency of the device in accordance with the invention is significantly greater than that of the prior device, and averages no less than 0.8. At the aforementioned angular speed $\omega$ of rotation of the vessel 3, the produced electrical power is completely expended in overcoming the internal ohmic resistance of the device as such. When the threshold rate $\omega$ is exceeded, an excess in the delivered mechanical energy will generate an external high-intensity electrical power (because the current density aporoaches a maximum value or the saturation state, and voltage increases unlimitedly) which, in turn, is already capable of performing operation on the consumer. In so doing, the device takes on the properties of a thermochemical electrical current source (generator) which operates with side emission of free hydrogen, oxygen, and heat absorption.

Therefore, the device converts Mechanical and Thermal energies into Electrical and Chemical energies.

The energy conversion device has a rather simple structure. It can be fabricated both in piece and quantity production, using traditional structural materials and conventional electrolytes. Owing to its high unit characteristics, such as a mass thermal power from 17 to 40 kJ·kg$^{-1}$ of the solution, hydrogen production from 15 to 35 mole·m$^{-2}$·c$^{-1}$ of the electrode and an average volume electrical power about 2.2 MW· m$^{-3}$, the device can be employed, e.g. in the assembly with ICE, on a car, tractor, diesel locomotive, aircraft, vessel and other vehicles with their fuel efficiency doubled, in steam turbines at thermal and nuclear power plants, as well as a standalone device to utilize industrial heat in metallurgy or natural heat in agriculture.

**Claims**

1. A device for converting energy, for example, by electrolysis, comprising: a rotating vessel with a shaft, said vessel being filled with an electrolytic solution, and mounted on a base, and connected to a rotary drive; electrodes, and passages for feeding the electrolytic solution to the vessel and discharging products of electrolysis, said device further comprising a heat exchanger; said electrodes being either short-circuited, or connected to form a loop via a power consumer; said vessel being mounted so that to rotate at an angular speed $\omega$ which is determined from the following mathematical relation:

$$\omega \geq \{[q_\alpha q_c(1-\alpha T)][16 \,\pi\, \varepsilon\, \varepsilon_0\, \Delta m\, \rho\, h\, K(R-0.5h)(2r_w+r_i)^2]^{-1}\}^{0.5},$$

    where

    $q_\alpha q_c$ are the anionic and cationic charge in the electrolyte, in stoichiometric relation, C;
    $T$ is the absolute temperature of the solution, K;
    $\Delta m$ is the difference between weights of hydrated cations and anions, kg;
    $\rho$ is the linear concentration of heavy ions, m$^{-1}$;
    $p = 10(C \cdot N)^{1/3}$, where
    $c$ is the mole percentage of the solution, mole·l$^{-1}$,
    $N$ is Avogadro constant, mole$^{-1}$;
    $h$ is the height of a solution column, m;
    $K$ is the electrolyte dissociation range, 10$^{-2}$%;
    $R$ is the inner radius of the vessel, m;
    $\alpha$ is the temperature coefficient of change in hydrate bond energy, K$^{-1}$;
    $\varepsilon_0$ is the absolute permittivity, F·m$^{-1}$;
    $\varepsilon$ is the relative permittivity of water;
    $r_w$ is the effective radius of water molecule, m;
    $r_i$ is the effective radius of heavy ion, m;
    $\pi$ is the transcedental number, 3.141.

Fig. 1

Fig. 2

Remaining See Fig. 1

Fig. 3

A-A

O₂ + H₂

Solution

Source of
Thermal energy

Solution + water

Fig. 4

B-B

Direction of the Rotation.

EP 1 130 134 A1

## INTERNATIONAL SEARCH REPORT

International application No.
PCT/RU 98/00190

**A. CLASSIFICATION OF SUBJECT MATTER**

C 25B 9/00 // C25B 1/02

According to International Patent Classification (IPC) or to both national classification and IPC

**B. FIELDS SEARCHED**

Minimum documentation searched (classification system followed by classification symbols)   MПK-6:

B03C 9/00, B04B 5/00-5/10, C01B 3/00-3/06, C25B 1/00-1/12, 9/00-9/04, F02B 43/00, F02M 21/00-21/06

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2015395 C1 (ILIN Guenadiy Vassilievich) 30 September 1992 (30.09.92) | 1 |
| A | RU 2006526 C1 (ASSOTSIATSIA "EKOLOGIA I MILOSERDIE" / "Ekomil"/ 30 January 1994 (30.01.94)) | 1 |
| A | SU 1084349 A (INSTITUT YADERNOI ENERGETIKI AN BSSR) 07 april 19984 (07.04.84) | 1 |
| A | US 4699700 A (DELPHI RESEARCH, INC.)  13 october 1987 (13.10.87) | 1 |
| A | DE 3117483 A1 (UHDE Gmbh) 18 november 1982 (18.11.82) | 1 |

☐ Further documents are listed in the continuation of Box C.          ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 september 1998 (10.09.98) | 28 October 1998 (28.10.98) |

| Name and mailing address of the ISA/ <br> **R.U.** | Authorized officer |
|---|---|
| Facsimile No. | Telephone No. |

Form PCT/ISA/210 (second sheet) (July 1992)